# EUROPÄISCHE PATENTSCHRIFT

(11) **EP 4 491 367 B1**
(45) Veröffentlichungstag und Bekanntmachung des Hinweises auf die Patenterteilung: **04.03.2026**
(21) Anmeldenummer: 24196601.9
(22) Anmeldetag: 22.11.2017
(51) Int. Cl.: B29C 48/03, B29C 48/154, B29C 48/92

(54) **EXTRUSIONSEINRICHTUNG, EXTRUDER UND VERFAHREN ZUM UMMANTELN VON DRÄHTEN, KABELVORPRODUKTEN ODER LITZEN**
EXTRUSION DEVICE, EXTRUDER AND METHOD FOR SHEATHING WIRES, CABLE FABRICATED MATERIALS OR STRANDS
DISPOSITIF D'EXTRUSION, EXTRUDEUSE ET PROCÉDÉ POUR ENROBER DES FILS, DES PRODUITS SEMI-FINIS DE CÂBLES OU DES TORONS

(30) Priorität: 08.12.2016 DE 102016123736
(43) Veröffentlichungstag der Anmeldung: 15.01.2025
(62) Teilanmeldung aus: 17825731.7
(73) Patentinhaber: BizLink Industry Germany GmbH, 91154 Roth (DE)
(72) Erfinder: Engler, Benedikt, 26129 Oldenburg (DE); Thiede, Jörg, 21696 Gehlenberg (DE)
(74) Vertreter: Weidner Stern Jeschke

(56) Entgegenhaltungen:
- EP-A1- 0 513 616
- DE-A1- 102008 061 286
- JP-A- 2009 166 244
- JP-A- S6 071 221
- US-A- 4 551 087
- US-A- 5 795 531
- US-A1- 2002 158 357

## Beschreibung

Die Erfindung betrifft eine Extrusionseinrichtung zum Ummanteln von Drähten, Kabelvorprodukten oder Litzen, wobei die Extrusionseinrichtung einen Extrusionskopf mit einer Vorproduktführung und eine Formmatrize aufweist, wobei die Vorproduktführung und die Formmatrize derart zueinander angeordnet sind, dass durch eine Öffnung der Vorproduktführung eine Formmasse durch die Formmatrize zu einem extrudierten Formstück formbar ist. Des Weiteren betrifft die Erfindung einen Extruder und ein Verfahren zum Ummanteln von Drähten, Kabelvorprodukten und Litzen.

Zur Extrusion werden üblicherweise feste bis flüssige härtbare Massen unter Druck und/oder erhöhter Temperatur kontinuierlich mittels einer Düse durch eine Formmatrize (Mundstück) zu einem langen Formstück gepresst. Die Extrusion wird beispielsweise zum Ummanteln von Drähten, Kabelvorprodukten und Litzen verwendet, wobei der Mantel aus der Formmasse auf die Drähte, Kabelvorprodukte oder Litzen aufgebracht wird.

Bei der Extrusion führen bereits geringste Unterschiede in der Temperatur und/oder im Druck und die Notwendigkeit der Fertigung unter sehr engen Toleranzen dazu, dass häufig die ersten 200m bis 500m der ummantelten Drähte, Kabelvorprodukte oder Litzen als Abfall entsorgt werden müssen.

Beim Extrudieren ist es besonders wichtig, dass die Öffnung der Vorproduktführung optimal zur Formmatrize ausgerichtet ist. Zudem muss die Ummantelung radial homogen um den Draht, das Kabelvorprodukt oder die Litze und zur Zentrier- und Längsachse erfolgen.

Beim Ummanteln von elektrischen Leitern (Drähte und Litzen) wird das Zentrieren der Vorproduktführung und/oder der Formmatrize üblicherweise manuell durchgeführt. Die Ausrichtung der Formmatrize erfolgt hierbei über eine Zentrierplatte, welche auf den Extrusionskopf mit der Vorproduktführung aufgesetzt ist. Mittels Verschraubpositionen an der Zentrierplatte wird ein Kippen der Zentrierplatte und somit der Formmatrize durchgeführt. Durch die Beschränkung auf das Kippen und die händische Einstellung, erfolgt die Ausrichtung von Vorproduktführung und Formmatrize zueinander nicht fein genug, um geforderte, sehr geringe Fertigungstoleranzen zu erreichen.

Aus der DE 692 11 772 T2 (EP 0 513 616 81) ist eine Extrusionseinrichtung zum Ummanteln von Drähten, Kabelvorprodukten oder Litzen bekannt, wobei die Extrusionseinrichtung einen Extrusionskopf mit Vorproduktführung und eine Formmatrize aufweist.

Servomotoren, mittels deren Bewegungen zwei Zentriereinrichtungen zueinander ausgerichtet werden können, sind aus der US 5 795 531 A bekannt. Zudem wird ein Verfahren offenbart, bei dem ein durchlaufender Draht in den Extrusionskopf eingebracht wird.

In der US 4 551 087 A ist ein Verfahren zum Vergleichen der ermittelten Dicke zu einer Solldicke einer Isolationsschicht offenbart, wobei mittels Einstellwerkzeugen an einem Extrusionsgerät die Dicke der Isolationsschicht verändert werden kann.

Aus der DE 10 2008 061 286 A1 ist eine Extrusionsvorrichtung zur Herstellung von schlauchförmigen Hohlkörpern oder Ummantelungen bekannt, welche ein einstellbar positionierbares Mundstück im Bereich einer Extruderdüse aufweist.

Eine Vorrichtung, die einen Extruderkopf aufweist, der über eine Düse, eine Einlassdüse und eine Auslassdüse aufweist, um einen elektrischen Leiter hindurchzuführen und den elektrischen Leiter dabei mit einer Dämmschicht zu ummanteln ist aus der US 4 668 173 A bekannt.

In der DE 87 04 664 U1 ist eine Vorrichtung mit Zentriereinrichtung zur Herstellung von Rohren offenbart, wobei die Zentriervorrichtung bewegliche Keile aufweist und der Vorrichtung eine Messeinrichtung zugeordnet ist, die die Wanddickenverteilung überprüft.

In der JP 2009 166244 A wird eine Extrusionseinrichtung zum Ummanteln eines elektrischen Kabels beschrieben, bei welcher die Extrusionsform die Vorproduktführung innerhalb eines Kreuzkopfhauptkörpers umgibt und die Extrusionsmasse durch einen Spalt zwischen der Extrusionsform und der Vorproduktführung geführt wird. Zur Zentrierung ist die Extrusionsform von vier rotierbaren Verbindungselementen umgeben, welche jeweils an ihrem einen Ende rotierbar über einen Rotationsschaft an dem Kreuzkopfhauptkörper befestigt sind und auf deren entgegengesetzten Enden jeweils ein Anpassungsschraube einwirken kann, welche jeweils durch eine Bohrung durch den Kreuzkopfhauptkörper geführt ist. Anstelle der außermittig zur Extrusionsform angeordneten Anpassungsschrauben zum Bewirken der Rotationsbewegungen der Verbindungselemente werden auch Antriebe betrieben durch elektrischen, pneumatischen, hydraulischen Druck vorgeschlagen. In der JP S6071221 A werden als Antriebsquellen Statormotoren offenbart, welche die Einstellschrauben einer Form rotieren.

Aus der DE 10 2014 103 101 A1 ist eine Vorrichtung bekannt, die zur Herstellung von blasgeformten Kunststoffhohlkörpern geeignet ist, wobei schlauchförmige Vorformlinge aus mehreren nebeneinander angeordneten Extrusionswerkzeugen eines Mehrfachextrusionskopfes zeitgleich extrudiert und Blasformkavitäten einer Schließeinheit zugeführt werden.

Die US 2002/158357 A1 offenbart eine Extrusionsvorrichtung, bei welcher die Form mit einer runden Oberfläche entlang ihrer Längsachse gut passend in einer runden Aufnahme von einem Formhalter umgeben ist, wobei der Formhalter von einem Formgehäuse umgeben ist. Die Position der Form kann mittels zweier, rechtwinklig zueinander angeordneten Einstellschrauben in dem Formhalter angepasst werden, wobei die Einstellschrauben durch das Formgehäuse hindurchgeführt und innerhalb des Formhalters verankert sind und den Formhalter entlang zweier unterschiedlicher senkrecht seitlicher Richtungen schieben oder ziehen. Anstelle der Einstellschrauben kann die Position der Form auch durch den Einbau von elektrischen Treibervorrichtungen, wie piezoelektrischen Aktoren, angepasst werden.

JP S60 71221 A betrifft eine Positioniereinstelleinrichtung mit einem Rahmenkörper und einer Form eines Extruderkopfes, wobei an der Form vier Fluidkolben mit entsprechenden Stempeln mit einem Druck in radialer Richtung angeordnet sind. Hierbei sind die Hübe zweier Fluidkolben derart eingestellt, dass diese stets größer als die Hübe zweier zusätzlich angeordneter Positionseinstellschrauben sind, sodass auf diese Positionseinstellschrauben ständig eine Druckkraft wirkt. Die Einstellschrauben drücken dagegen von außen gegen die zwei Fluidkolben, welche in dem Rahmenkörper eingeschraubt sind. Die Positioniereinstelleinrichtung mit den Fluidkolben in ihrem Rahmenkörper ist am Kreuzkopf durch geeignete Mittel an einer Vorderseite eines Deckelkörpers befestigt. Der Rahmenkörper ist wiederum über eine Stopperplatte mittels Fixierschrauben an der Form befestigt.

Aufgabe der Erfindung ist es, den Stand der Technik zu verbessern.

Gelöst wird die Aufgabe durch eine Extrusionseinrichtung zum Ummanteln von Drähten, Kabelvorprodukten oder Litzen, wobei die Extrusionseinrichtung einen Extrusionskopf mit einer Vorproduktführung und eine Formmatrize aufweist, wobei die Vorproduktführung und die Formmatrize derart zueinander angeordnet sind, dass durch eine Öffnung der Vorproduktführung eine Formmasse durch die Formmatrize zu einem extrudierten Formstück formbar ist, und der Vorproduktführung und/oder der Formmatrize eine motorische Stelleinrichtung zugeordnet ist, sodass im Falle eines Anlegens eines Stellsignals an die motorische Stelleinrichtung mittels einer Bewegung der motorischen Stelleinrichtung die Vorproduktführung und die Formmatrize zueinander ausrichtbar sind, und ein Vorkopf und/oder die motorische Stelleinrichtung nicht-integriert an dem Extrusionskopf angeordnet ist oder sind, wobei der Vorkopf und/oder die motorische Stellvorrichtung separat auf einer verschiebbaren Schiene angeordnet ist oder sind.

Durch das Ausrichten der Vorproduktführung und der Formmatrize zueinander mittels der motorischen Stelleinrichtung ist eine feinere Einstellung möglich, so dass bessere Zentrizitätswerte und somit bessere Produkteigenschaften erreicht werden. Zudem wird eine bessere Reproduzierbarkeit der Produktqualitäten erzielt.

Es ist besonders vorteilhaft, dass ein schnelleres Ausrichten der Vorproduktführung und der Formmatrize zueinander sowohl beim Einfahren als auch beim Vorliegen von veränderten Fertigungsparametern und Störungen erfolgt. Somit kann der Materialverbrauch, der Ausschuss und die zu entsorgende Abfallmenge (Schrott) reduziert werden.

Durch Anlegen des Stellsignals wird ein sehr genaues, automatisches Zentrieren des Extrusionskopfes und/oder der Formmatrize ermöglicht.

Vorteilhaft ist weiterhin gegenüber dem Stand der Technik, dass eine kippbare Zentrierplatt eines Vorkopfes des Extrusionskopfes entfällt und dadurch die motorische Stelleinrichtung selbst und/oder der Vorkopf nicht mehr zwingend fest lokalisiert werden muss oder müssen, sondern beispielsweise separat auf einer verschiebbaren Schiene angeordnet werden kann oder können. Somit sind eine bessere Zugänglichkeit zur Stelleinrichtung und/oder zum Vorkopf und eine bessere Austauschbarkeit gegeben.

Ein wesentlicher Gedanke der Erfindung beruht darauf, dass durch Anlegen eines Stellsignals an die motorische Stelleinrichtung mittels einer dadurch bewirkten Bewegung der motorischen Stelleinrichtung ein sehr definiertes und feines Ausrichten der Vorproduktführung und der Formmatrize zueinander erfolgt.

Es ist besonders vorteilhaft, dass eine direkte lineare Proportionalität zwischen dem angelegten Stellsignal und der Stellbewegung der motorischen Stelleinrichtung besteht.

### Folgendes Begriffliche sei erläutert:

Eine "Extrusionseinrichtung" ist insbesondere eine Einrichtung zum Extrudieren einer Formmasse durch eine Vorproduktführung und eine Formmatrize zu einem extrudierten Formstück. Eine Extrusionseinrichtung ist insbesondere eine Einrichtung zum Ummanteln von Drähten, Kabelvorprodukten oder Litzen. Mittels einer Extrusionseinrichtung erfolgt insbesondere eine
Kalt-, Warm- und/oder Heißextrusion. Die Extrusionseinrichtung arbeitet insbesondere bei einem Druck von 10Bar bis 1.500Bar und einer Temperatur von 10°C bis 500°C. Bei einer Extrusionseinrichtung kann es sich aber insbesondere auch um eine Einrichtung zur Rohr-, Profil- und/oder Folienextrusion sowie zum Strangpressen handeln. Eine Extrusionseinrichtung weist insbesondere einen Extrusionskopf, eine Vorproduktführung, eine Formmatrize und/oder einen separaten oder integrierten Vorkopf zum Extrusionskopf auf. Bei einer Extrusionseinrichtung kann es sich insbesondere auch direkt um den Extrusionskopf handeln, welcher neben der Vorproduktführung auch die Formmatrize aufweist.

Ein "Draht" ist insbesondere ein dünn, lang und/oder biegsam geformtes Metall mit kreisförmigem Querschnitt. Bei einem Draht kann es sich aber auch um einen Flach-, Vierkant- oder Profildraht handeln. Ein Draht besteht insbesondere aus Kupfer, Aluminium oder einer Kupferlegierung.

Eine "Litze" ist ein aus dünnen Einzeldrähten bestehender elektrischer Leiter und insbesondere leicht verbiegbar. Als Abgrenzung zu unflexiblen eindrähtigen und/oder mehrdrähtigen Adern wird eine Litze insbesondere auch als fein- oder feinstdrähtiger Leiter bezeichnet. Bei Hochfrequenz-Litzen sind die Einzeldrähte voneinander insbesondere durch eine Lackschicht isoliert. Eine Litze weist insbesondere Kupfer auf. Die Einzeldrähte der Litze sind insbesondere von einer gemeinsamen Isolierhülle umschlossen (Litzenleitung). Sind insbesondere mehrere Litzenleitungen in einem Kabel vereint, so werden diese Adern genannt. Eine Litze weist eine Dicke von 0,004mm bis 4mm auf.

Eine "Ader" ist insbesondere eine einzelne Leitung innerhalb eines Bündels eines Kabels. Bei einer Ader handelt es sich üblicherweise um einen isolierten Draht oder Litze. Ein mit Isolierstoffen ummantelter ein- oder mehradriger Verbund von Adern bildet insbesondere ein "Kabelvorprodukt". Eine Ader weist als Leiterwerkstoff insbesondere Kupfer, Aluminium, Silber, Stahl und/oder Blei auf. Eine Ader weist insbesondere eine Dicke von 0,1mm bis 15mm auf.

Unter "Ummanteln" wird insbesondere das Extrudieren (Aufspritzen) eines Mantels außen um einen Draht, ein Kabelvorprodukt oder eine Litze verstanden. Das Ummanteln dient insbesondere der Isolation und/oder Abschirmung des Drahtes, Kabelvorproduktes oder der Litze. Zum Ummanteln werden insbesondere Kunststoffe wie Polyolefine, Polyurethan, Polyvinylchlorid, Polytetrafluorethylen (PTFE) und/oder Silikon als Formmasse verwendet.

Ein "Extrusionskopf" ist insbesondere ein Bauteil, welches die fließfähige Formmasse unter Druck aufnimmt und über Strömungskanäle der Vorproduktführung zuführt. Gleichzeitig kann ein Extrusionskopf insbesondere ein durchlaufendes Vormaterial, wie einen Draht, Kabelvorprodukt oder eine Litze, aufnehmen. Neben der Vorproduktführung kann ein Extrusionskopf auch insbesondere eine Formmatrize aufweisen oder die Formmatrize ist dem Extrusionskopf zugeordnet. In dem Extrusionskopf ist oder sind insbesondere ein oder mehrere Extruder und/oder ein oder mehrere Förderaggregate zum Zuführen der Formmasse angeordnet.

Eine "Vorproduktführung" ist insbesondere eine Düse mit einer Öffnung, durch welche insbesondere ein Draht, Kabelvorprodukt oder eine Litze kontinuierlich geführt und/oder die Formmasse kontinuierlich gepresst (extrudiert) wird. Eine Düse ist insbesondere eine sich verjüngende rohrförmige technische Vorrichtung mit einer Öffnung am kleinsten verjüngten Querschnitt. Eine Vorproduktführung ist insbesondere auch ein Konfuser. Bei einer Vorproduktführung kann es sich um eine Extrusionsdüse handeln.

Eine "Formmatrize" ist insbesondere ein Werkzeug, welches der die Vorproduktführung verlassenen Formmasse eine Form aufprägt. Eine Formmatrize wird insbesondere auch als Mundstück bezeichnet. Die Formmasse fließt insbesondere durch das Innere der Formmatrize und füllt dabei die innere Form der Formmatrize aus. Im Fall von durchlaufendem Vormaterial wie Drähte, Kabelvorprodukte oder Litzen wird dieses insbesondere zentrisch durch die Formmatrize geführt, wobei die Formmasse die Außenfläche des Vormaterials ummantelt und selbst als äußere Oberfläche die Form der inneren Oberfläche der Formmatrize annimmt.

Eine "motorische Stelleinrichtung" ist insbesondere eine Stelleinrichtung, welche auf Bewegung bezogen ist. Eine motorische Stelleinrichtung ist insbesondere eine Einrichtung, welche eine Bewegung ausführt und/oder erzeugt. Eine motorische Stelleinrichtung führt insbesondere eine lineare Längenausdehnung und/oder -bewegung aus. Bei einer motorischen Stelleinrichtung ist insbesondere die Länge der linearen Bewegung (Stellweg) proportional zu einem angelegten Stellsignal. Bei einer motorischen Stelleinrichtung handelt es sich insbesondere um einen Linearmotor, Exzenter, Spindelverstellung und/oder einen Piezoaktor.

Unter einem "Stellsignal" ist insbesondere ein elektrisches oder pneumatisches Signal zu verstehen. Bei einem Stellsignal handelt es sich insbesondere um ein normiertes Einheitssignal, beispielsweise ein Stromsignal vom 0mA bis 20mA oder ein Spannungssignal von 0V bis 10V. Durch Anlegen des Stellsignals an die motorische Stelleinrichtung wird insbesondere eine definierte Bewegung der motorischen Stelleinrichtung induziert. Das Anlegen des Stellsignals kann manuell und/oder automatisch erfolgen. Beispielsweise kann durch manuelles Drehen eines Drehknopfes mit Schrittskalierung das Stellsignal schrittweise erhöht und somit die Bewegung der motorischen Stelleinrichtung schrittweise verlängert werden. Ebenso kann das Anlegen des Stellsignals automatisch über eine Steuer- und/oder Regeleinrichtung der Extrusionseinrichtung und/oder einer externen Einrichtung erfolgen.

Eine "Bewegung" ist insbesondere eine geradlinige Bewegung oder eine Bewegung auf einer gekurvten Bahn der motorischen Stelleinrichtung, wodurch wiederum ein getriebenes Objekt, wie beispielsweise die Formmatrize und/oder Vorproduktführung, in Bewegung gesetzt wird. Eine Bewegung ist insbesondere eine Ortsveränderung der motorischen Stelleinrichtung und/oder der Vorproduktführung und/oder der Formmatrize.

Unter "Ausrichten" wird insbesondere ein räumliches Anordnen der Vorproduktführung und der Formmatrize zueinander verstanden, sodass eine Formmasse optimal durch die Öffnung der Vorproduktführung und der nachfolgenden Formmatrize zu einem extrudierten Formstück geformt wird. Das Ausrichten umfasst insbesondere auch das Zentrieren, bei dem ein Ausrichten auf den Mittelpunkt oder die Mittelachse (Zentrierachse) von Bauteilen erfolgt. Insbesondere werden die Vorproduktführung und die Formmatrize so zueinander zentriert, dass eine geringe Exzentrizität (als Maß für die Abweichung von der Kreisform) eines gefertigten Formstückes und/oder eines ummantelten Drahtes, Kabelvorproduktes oder Litze besteht.

In einer weiteren Ausführungsform weist die Extrusionseinrichtung eine Aufnahmeeinrichtung zur Aufnahme eines durchlaufenden Vormaterials, insbesondere eines Drahtes, Kabelvorproduktes oder einer Litze, auf, sodass das Vormaterial mit der Formmasse ummantelbar ist.

Somit kann nicht nur eine optimale Ausrichtung der Vorproduktführung und der Formmatrize zueinander, sondern auch deren Ausrichtung in Bezug auf ein aufgenommenes, durchlaufendes Vormaterial erfolgen.

Folglich ist eine optimale Draht-, Litzen-, Ader-, Mantel- und/oder Kabelextrusion realisierbar.

Erfindungsgemäß ist oder sind der Vorkopf und/oder die motorische Stellvorrichtung separat auf einer verschiebbaren Schiene angeordnet.

In einer weiteren Ausführungsform der Extrusionseinrichtung weist der Extrusionskopf ein Kopfgehäuse auf.

Um eine gleichmäßige und/oder räumlich komplexere Bewegung zu induzieren, weist die motorische Stelleinrichtung einen Ausrichtkörper auf, wobei der Ausrichtkörper mit der Formmatrize mechanisch wirkverbunden ist.

Somit kann durch Bewegung der motorischen Stelleinrichtung gegen den Ausrichtkörper die Formmatrize ausgerichtet werden.

Es ist besonders vorteilhaft, wenn der Ausrichtkörper ein Ring ist, sodass eine komplexere radiale Ausrichtung der Formmatrize realisierbar ist.

Alternativ kann der Ausrichtkörper auch an der Vorproduktführung angeordnet und somit die Vorproduktführung ausgerichtet werden. Ebenso kann das Vorprodukt entsprechend ausgelenkt werden, sodass über die Auslenkung eine Zentrierung realisiert werden kann.

In einer weiteren Ausführungsform ist die motorische Stelleinrichtung an der Formmatrize und/oder an dem Ausrichtkörper angeordnet.

Dadurch ist eine freie Positionierung der motorischen Stelleinrichtung zur Ausrichtung der Vorproduktführung und/oder der Formmatrize möglich. Zudem kann die motorische Stelleinrichtung direkt an der Vorproduktführung und/oder der Formmatrize wirken und/oder indirekt über den Ausrichtkörper.

Um eine definierte lineare Bewegung zu erzeugen, weist die motorische Stelleinrichtung einen Linearmotor, einen Exzenter und/oder einen Piezoaktor auf.

Somit kann die elektrische Energie des Stellsignales mittels des Linearmotors, Exzenters und/oder des Piezoaktors direkt in eine mechanische, lineare Längenausdehnung und/oder in eine lineare Bewegung im Nanometer-Bereich überführt werden.

Zudem kann bei Verwenden eines Piezoaktors aufgrund seiner Temperaturbeständigkeit bis zu 250°C eine Fertigung bei hohen Temperaturen und ohne Beeinträchtigung der Produktqualität realisiert werden.

Ein "Linearmotor" ist insbesondere eine elektrische Antriebsmaschine, welche ein von diesem getriebenes Objekt auf einer geradlinigen oder gekurvten Bahn verschiebt. Ein Linearmotor erzeugt insbesondere eine direkte translatorische Bewegung.

Ein "Exzenter" ist insbesondere eine auf einer Welle angebrachte Steuerungsscheibe, deren Mittelpunkt außerhalb der Wellenachse liegt. Ein Exzenter wandelt insbesondere rotatorische (Dreh-) in translatorische (Längen-) Bewegungen um.

Ein "Piezoaktor" ist insbesondere ein Bauteil, welches den Piezoeffekt ausnutzt, um durch Anlegen einer elektrischen Spannung eine mechanische Bewegung auszuführen. Bei einem Piezoaktor handelt es sich insbesondere um einen Piezostapel in Sandwich-Bauweise. Ein Piezoaktor weist insbesondere eine Piezokeramik auf. Der Piezostapel eines Piezoaktors ist üblicherweise in einem Gehäuse untergebracht, wobei zwischen Gehäuse und Piezokeramik insbesondere eine Vorspannung aufgebracht wird, um Zugkräfte durch das getrieben Objekt zu vermeiden. Ein Piezoaktor weist insbesondere eine Führung, beispielsweise eine biegsame Festkörperführung, auf. Ein Piezoaktor bewirkt insbesondere durch seine Längenausdehnung eine Bewegung.

Um eine schnelles und flexibles Ausrichten in die verschiedenen Raumrichtungen zu ermöglichen, weist die motorische Stelleinrichtung einen zweiten Linearmotor, einen zweiten Exzenter und/oder eine zweiten Piezoaktor, einen dritten Linearmotor, einen dritten Exzenter und/oder einen dritten Piezoaktor, einen vierten Linearmotor, einen vierten Exzenter und/oder einen vierten Piezoaktor und/oder weitere Linearmotoren, weitere Exzenter und/oder weitere Piezoaktoren auf.

Somit können gleichzeitig mehrere Bewegungen aus verschiedenen Richtungen zum Ausrichten der Vorproduktführung und der Formmatrize zueinander verwendet werden.

Es ist besonders vorteilhaft, wenn vier Linearmotoren, Exzenter und/oder Piezoaktoren an der Außenseite eines Ausrichtringes in jeweils 90° Abständen angeordnet sind, wobei der Außenring beispielsweise um die Formmatrize angeordnet ist, sodass sehr schnell und präzise die Zentrizität der Formmatrize eingestellt und/oder das Ausrichten der Formmatrize zur Zentrierachse der Extrusionseinrichtung erfolgen kann.

Ein zweiter, dritter, vierter und/oder weiterer Linearmotor entspricht in seiner Funktion dem oben definierten Linearmotor, wobei jedoch jeder einzelne Linearmotor an einer unterschiedlichen Position in der Extrusionseinrichtung angeordnet ist.

Ein zweiter, dritter, vierter und/oder weiterer Exzenter entspricht in seiner Funktion dem oben definierten Exzenter, wobei jedoch jeder einzelne Exzenter an einer unterschiedlichen Position in der Extrusionseinrichtung angeordnet ist.

Ein zweiter, dritter, vierter und/oder weiterer Piezoaktor entspricht dem oben definierten Piezoaktor, wobei jeder einzelne Piezoaktor an unterschiedlicher Position in der Extrusionseinrichtung angeordnet ist.

In einer weiteren Ausführungsform der Extrusionseinrichtung ist der Ausrichtkörper ein Ausrichtring und vier Piezoaktoren sind in einem Abstand von 90° außen an dem Ausrichtring angeordnet.

In einer weiteren Ausführungsform der Extrusionseinrichtung weist oder weisen der Linearmotor, der Exzenter und/oder der Piezoaktor oder die Linearmotoren, die Exzenter und/oder die Piezoaktoren einen Stellweg im Bereich von 0,01nm bis 1mm, bevorzugt von 0,1nm bis 200µm auf.

Folglich kann eine sehr präzise und sehr feine Einstellung der Ausrichtung der Vorproduktführung und/oder der Formmatrize erzielt werden. Somit können sehr geringe Fertigungstoleranzen von ±0,05mm erreicht und somit die Produktqualität verbessert werden.

Ein "Stellweg" ist insbesondere die Längenänderung eines Piezoaktors oder der Verschiebeweg eines Linearmotors oder Exzenters.

Um ein kontinuierliches Ausrichten und Anpassen der Ausrichtung der Vorproduktführung und der Formmatrize während der Fertigung zu ermöglichen, ist oder sind der Extrusionseinrichtung eine Messeinrichtung zum Bestimmen mindestens einer Messgröße eines extrudierten Formstückes und/oder eine Steuer- und/oder Regeleinrichtung zugeordnet, sodass in Abhängigkeit von der bestimmten Messgröße das Stellsignal an die motorische Stelleinrichtung anlegbar ist.

Dadurch kann beispielsweise kontinuierlich der Ist-Zentrizitätswert des Formstückes oder des aufgebrachten Mantels des ummantelten Drahtes, Kabelvorproduktes oder Litze erfasst und zum Steuern und/oder Regeln der motorischen Stelleinrichtung verwendet werden.

Es ist besonders vorteilhaft, dass dadurch der Außendurchmesser, die Ovalität, Wanddicke und Exzentrizität sowie die Schräglage eines ummantelten Drahtes, Kabelvorproduktes oder Litze bestimmt und mittels der Extrusionseinrichtung und/oder der Steuer- und/oder Regeleinrichtung eine Korrektur dieser Parameter direkt während der Fertigung erfolgen kann.

Folglich kann ein "Weglaufen" der Exzentrizität während der Fertigung verhindert werden und ein Ausgleichen von Langzeitschwingungen erfolgen.

Eine "Messeinrichtung" ist insbesondere eine Gesamtheit aller Messgeräte und zusätzlicher Einrichtungen zum Erzielen eines Messergebnisses. Eine Messeinrichtung weist insbesondere ein Messgerät oder mehrere Messgeräte auf, welche zur Messung einer Messgröße vorgesehen sind. Eine Messeinrichtung und/oder ein Messgerät weist oder weisen insbesondere einen Messgrößenaufnehmer (Sensor) auf. Bei einer Messeinrichtung handelt es sich insbesondere um eine Online-Messeinrichtung zum berührungslosen und kontinuierlichen Vermessen von Adern, Drähten, Litzen und/oder Kabeln. Die Messeinrichtung führt insbesondere eine Acht-Punkt-Exzentrizitäts-, Vier-Achs-Durchmesser- und/oder Acht-Punkt-Ovalitäts-Messung durch. Die Messeinrichtung weist insbesondere zwei optische Messgeräte und ein induktives Messgerät zur Messung der Konzentrizität eines Drahtes, Kabelvorproduktes oder Litze in der Isolation (Mantel) und der Produktparameter Außendurchmesser, Ovalität und Wanddicke auf. Zudem erfasst die Messeinrichtung insbesondere eine Schräglage des Drahtes, Kabelvorproduktes oder Litze in einer Messebene und somit zur Zentrierachse der Extrusionseinrichtung.

Eine "Steuereinrichtung" ist insbesondere eine Einrichtung, bei welcher eine oder mehrere Größen als Eingangsgröße andere Größen als Ausgangsgrößen aufgrund von Systembedingungen beeinflusst. Bei einer Steuereinrichtung handelt es sich insbesondere um eine Einrichtung, welche beabsichtigt das Verhalten der Extrusionseinrichtung beeinflusst. Insbesondere wird mit der Steuereinrichtung ein Stellsignal an die motorische Stelleinrichtung vorgegeben.

Eine "Regeleinrichtung" ist insbesondere eine Einrichtung, bei welcher eine Größe als Regelgröße kontinuierlich erfasst, mit einer anderen Größe als Führungsgröße verglichen und in Abhängigkeit des Ergebnisses dieses Vergleiches zur Abgleichung an die Führungsgröße beeinflusst wird. Eine Regeleinrichtung verwendet insbesondere einen geschlossenen Regelkreis. Bei Verwenden einer Regeleinrichtung wird insbesondere der Sollwert, beispielsweise die vorgegebenen Exzentrizität, mit dem gemessenen Ist-Exzentrizitätswert der Messeinrichtung (Regelgröße) verglichen und aufgrund der Abweichung vom Sollwert wird ein Stellsignal von der Regeleinrichtung an die motorische Stelleinrichtung angelegt, um die Ausrichtung der Vorproduktführung und/oder der Formmatrize zu optimieren und somit den Sollwert der Exzentrizität einer gefertigten Ader oder Litze zu erreichen.

Eine "Messgröße" ist insbesondere diejenige physikalische Größe, welcher eine Messung gilt. Die Messgröße war oder ist insbesondere das Ziel einer Messung. Die Messgröße muss nicht unmittelbar Gegenstand der Messung sein, sondern kann auch über physikalische und/oder mathematische Gesetzmäßigkeiten aus einer Größe oder mehreren Größen bestimmt werden. Bei der Messgröße handelt es sich insbesondere um eine physikalische Eigenschaft des extrudierten Formstückes oder der ummantelten Drähte, Kabelvorprodukte oder Litzen. Die Messgröße ist insbesondere der Durchmesser, die Ovalität, Wanddicke, Konzentrizität, Schräglage und/oder Biegelage eines Drahtes, Kabelvorproduktes oder einer Litze.

In einem weiteren Aspekt der Erfindung wird die Aufgabe gelöst durch einen Extruder zum Ummanteln von Drähten, Kabelvorprodukten oder Litzen, wobei der Extruder eine zuvor beschrieben Extrusionseinrichtung aufweist.

Somit wird ein Extruder mit optimaler Steuerung und/oder Regelung des Extrusionsprozesses und zum Fertigen von verbesserten Produkteigenschaften durch genauere Zentrizitätswerte oder andere gewünschte Produktparameter bereitgestellt.

Vor allem ist mittels des Extruders eine reproduzierbare Qualität der extrudierten Formstücke und ummantelten Drähten, Kabelvorprodukten oder Litzen zu erzielen.

Ein "Extruder" ist insbesondere eine Fertigungseinrichtung zur Extrusion. Bei einem Extruder handelt es sich insbesondere um einen Kolbenextruder oder um einen Schneckenextruder mit einer, zwei oder mehreren Schneckenwellen. Zudem weist ein Extruder insbesondere einen Antrieb, eine Extrusionskopf mit einer Vorproduktführung, eine Formmatrize, einen Vorkopf und/oder eine Messeinrichtung auf.

In einem zusätzlichen Aspekt der Erfindung wird die Aufgabe gelöst durch ein Verfahren zum Ummanteln von Drähten, Kabelvorprodukten oder Litzen mittels einer zuvor beschriebenen Extrusionseinrichtung, insbesondere mit einer zuvor beschriebenen Messeinrichtung und/oder einer zuvor beschriebenen Steuer- und/oder Regeleinrichtung, und/oder einem zuvor beschriebenen Extruder, mit folgenden Schritten:
- Einbringen eines durchlaufenden Drahtes, Kabelvorproduktes oder einer durchlaufenden Litze in den Extrusionskopf,
- Extrudieren der Formmasse durch die Vorproduktführung und die Formmatrize zu einem ummantelten Draht, Kabelvorprodukt oder einer ummantelten Litze,
- Bestimmen mindestens einer Messgröße der ummantelten Drähte, Kabelvorprodukte oder der ummantelten Litze mittels der Messeinrichtung,
- Verwenden der bestimmten Messgröße zum Generieren des Stellsignals,
- Regeln und/oder Steuern der motorischen Stelleinrichtung durch Anlegen des Stellsignals,
- Bewegen der motorischen Stelleinrichtung gegen die Formmatrize und/oder den Ausrichtkörper,
- Ausrichten der Vorproduktführung und/oder der Formmatrize zueinander und
- Ausbringen eines zentriert ummantelten Drahtes, Kabelvorproduktes oder einer zentriert ummantelten Litze.

Somit wird insbesondere ein Verfahren zum Ummanteln von Drähten, Kabelvorprodukten oder Litzen bereitgestellt, bei welchem mindestens eine Produkteigenschaft des gefertigten ummantelten Drahtes, Kabelvorproduktes oder Litze online und/oder kontinuierlich erfasst wird, und daraufhin durch Ausrichten der Vorproduktführung und der Formmatrize zueinander der Fertigungsprozess angepasst und im Sinne der gefertigten Produktqualität optimiert wird.

Somit erlaubt dieses Fertigungsverfahren neben einer höheren Produktqualität auch eine Reduzierung des Materialverbrauchs, des Ausschusses und der Abfallmenge. Zudem können Störungen des Fertigungsprozesses sofort erkannt und kompensiert werden.

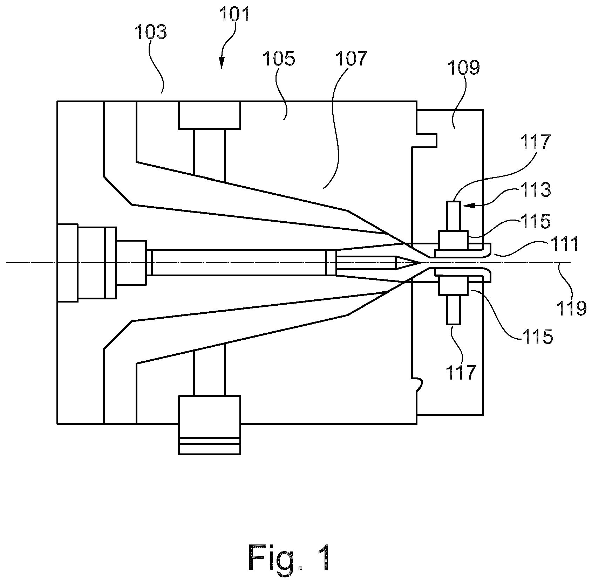

Im Weiteren wird die Erfindung anhand eines Ausführungsbeispiels näher erläutert. Es zeigt
- Figur 1: eine stark schematische Schnittdarstellung einer Extrusionseinrichtung mit Extrusionskopf, Vorproduktführung, Mundstück und Zentriereinrichtung.

Eine Extrusionseinrichtung 101 weist einen Extrusionskopf 103 mit einem Kopfgehäuse 105 und einer innenliegenden Vorproduktführung 107 auf. An den Extrusionskopf 103 ist ein Vorkopf 109 angeordnet.

Der Vorkopf 109 weist eine Zentriereinrichtung 113 auf. Die Zentriereinrichtung 113 umfasst ein Mundstück 111, einen Ausrichtungsring 115 und vier Piezoaktoren 117. Die vier Piezoaktoren 117 sind im Abstand von 90° außen am Ausrichtring 115 angeordnet (aus zeichnerischen Gründen sind die zwei Piezoaktoren, welche in die Bildebene und aus der Bildebene herausragen nicht gezeigt).

Der Extrusionseinrichtung 101 ist eine Zentrierachse 119 zugeordnet. Hinter der Extrusionseinrichtung 101 ist eine nicht gezeigte Messeinrichtung zur Messung der Zentrizität angeordnet. Des Weiteren gehört zu der Extrusionseinrichtung 101 eine nicht gezeigte Regeleinrichtung.

Folgende Arbeitsvorgänge werden mit der Extrusionseinrichtung 101 realisiert:

Eine Litze mit 0,25mm Außendurchmesser wird in den Extrusionskopf 103 eingebracht und durchläuft diesen und das Mundstück 101 kontinuierlich. Fliessfähiges Polyethylen (PE) wird bei einer Temperatur von 220°C und einem Druck von 300Bar durch die Vorproduktführung 107 und das Mundstück 111 gepresst und ummantelt die durchlaufende Litze.

Mittels der nicht gezeigten Messeinrichtung (Centerview 8000 der Firma Sikora) wird online und kontinuierlich die Zentrizität der gefertigten ummantelten Litze bestimmt. Die Messung ergibt, dass ein Exzentrizitätsausgleich von 1,15 (maximale Manteldicke zu minimaler Manteldicke) notwendig ist. Daraufhin wird von der nicht gezeigten Regeleinrichtung ein Stellsignal generiert und an die Zentrierungseinrichtung 113 gegeben. Daraufhin führt der obere Piezoaktor 117 eine Hubbewegung von 150µm bei einer Aktorlänge von 45mm gegen den Ausrichtring 115 aus, wodurch das Mundstück 111 in Bezug zur Zentrierachse 119 und zur Vorproduktführung 107 ausgerichtet wird. Anschließend wird eine besser zentrierte, ummantelte Litze aus der Extrusionseinrichtung 101 ausgebracht. Das Bestimmen der Zentrizität durch die Messeinrichtung wird während der Fertigung kontinuierlich wiederholt.

Somit wird ein Verfahren zum Ummanteln der Litze bereitgestellt, welches eine radial und longitudinal gleichmäßige Ummantelung der Litze realisiert und dadurch deren Funktionalität garantiert.

## Patentansprüche

1. Extrusionseinrichtung (101) zum Ummanteln von Drähten, Kabelvorprodukten oder Litzen, wobei die Extrusionseinrichtung (101) einen Extrusionskopf (103) mit einer Vorproduktführung (107) und eine Formmatrize (111) aufweist, wobei die Vorproduktführung (107) und die Formmatrize (111) derart zueinander angeordnet sind, dass durch eine Öffnung der Vorproduktführung (107) eine Formmasse durch die Formmatrize (111) zu einem extrudierten Formstück formbar ist, und der Vorproduktführung (107) und/oder der Formmatrize (111) eine motorische Stelleinrichtung (113) zugeordnet ist, sodass im Falle eines Anlegens eines Stellsignals an die motorische Stelleinrichtung (113) mittels einer Bewegung der motorischen Stelleinrichtung (113) die Vorproduktführung (107) und die Formmatrize (111) zueinander ausrichtbar sind, wobei ein Vorkopf (109) und/oder die motorische Stelleinrichtung (113) nicht-integriert an dem Extrusionskopf (103) angeordnet ist oder sind, **dadurch gekennzeichnet, dass** der Vorkopf (109) und/oder die motorische Stellvorrichtung (113) separat auf einer verschiebbaren Schiene angeordnet ist oder sind.

2. Extrusionseinrichtung (101) nach Anspruch 1, **dadurch gekennzeichnet, dass** die Extrusionseinrichtung (101) eine Aufnahmeeinrichtung zur Aufnahme eines durchlaufenden Vormaterials, insbesondere eines Drahtes, Kabelvorproduktes oder einer Litze, aufweist, sodass das Vormaterial mit der Formmasse ummantelbar ist.

3. Extrusionseinrichtung (101) nach einem der vorherigen Ansprüche, **dadurch gekennzeichnet, dass** der Extrusionskopf (103) ein Kopfgehäuse (105) aufweist.

4. Extrusionseinrichtung (101) nach einem der vorherigen Ansprüche, **dadurch gekennzeichnet, dass** die motorische Stelleinrichtung (113) einen Ausrichtkörper (115) aufweist, wobei der Ausrichtkörper (115) mit der Formmatrize (111) mechanisch wirkverbunden ist.

5. Extrusionseinrichtung (101) nach einem der vorherigen Ansprüche, **dadurch gekennzeichnet, dass** die motorische Stelleinrichtung (113) an der Formmatrize (111) und/oder an dem Ausrichtkörper (115) angeordnet ist.

6. Extrusionseinrichtung (101) nach einem der vorherigen Ansprüche, **dadurch gekennzeichnet, dass** die motorische Stelleinrichtung (113) mindestens einen Piezoaktor (117) aufweist.

7. Extrusionseinrichtung (101) nach Anspruch 6, **dadurch gekennzeichnet, dass** die motorische Stelleinrichtung (113) einen zweiten Piezoaktor (117), einen dritten Piezoaktor (117), einen vierten Piezoaktor (117) und/oder weitere Piezoaktoren (117) aufweist.

8. Extrusionseinrichtung (101) nach einem der Ansprüche 4 bis 7, **dadurch gekennzeichnet, dass** der Ausrichtkörper ein Ausrichtring ist und vier Piezoaktoren (117) in einem Abstand von 90° außen an dem Ausrichtring (115) angeordnet sind.

9. Extrusionseinrichtung (101) nach Anspruch 8, **dadurch gekennzeichnet, dass** der Vorkopf (109) eine als motorische Stelleinrichtung (113) ausgebildete Zentriereinrichtung aufweist, wobei die Zentriereinrichtung ein als Formmatrize (111) ausgebildetes Mundstück umfasst.

10. Extrusionseinrichtung (101) nach einem der Anspruch 6 bis 9, **dadurch gekennzeichnet, dass** der Piezoaktor oder die Piezoaktoren (117) einen Stellweg im Bereich von 0,01nm bis 1mm, bevorzugt von 0,1nm bis 200µm, aufweist oder aufweisen.

11. Extrusionseinrichtung (101) nach einem der vorherigen Ansprüche, **dadurch gekennzeichnet, dass** der Extrusionseinrichtung (101) eine Messeinrichtung zum Bestimmen mindestens einer Messgröße eines extrudierten Formstückes und/oder eine Steuer- und/oder Regeleinrichtung zugeordnet ist oder sind, sodass in Abhängigkeit von der bestimmten Messgröße das Stellsignal an die motorische Stelleinrichtung (113) anlegbar ist.

12. Extruder zum Ummanteln von Drähten, Kabelvorprodukten oder Litzen, **dadurch gekennzeichnet, dass** der Extruder eine Extrusionseinrichtung (101) nach einem der Ansprüche 1 bis 11 aufweist.

13. Verfahren zum Ummanteln von Drähten, Kabelvorprodukten oder Litzen mittels einer Extrusionseinrichtung (101) nach Anspruch 11 und/oder einem Extruder nach Anspruch 12, **gekennzeichnet durch** folgende Schritte
- Einbringen eines durchlaufenden Drahtes, Kabelvorproduktes oder einer durchlaufenden Litze in den Extrusionskopf,
- Extrudieren der Formmasse durch die Vorproduktführung (107) und die Formmatrize (111) zu einem ummantelten Draht, Kabelvorprodukt oder einer ummantelten Litze,
- Bestimmen mindestens einer Messgröße des ummantelten Drahtes, Kabelvorproduktes oder der ummantelten Litze mittels der Messeinrichtung,
- Verwenden der bestimmten Messgröße zum Generieren des Stellsignals,
- Regeln und/oder Steuern der motorischen Stelleinrichtung (113) durch Anlegen des Stellsignals,
- Bewegen der motorischen Stelleinrichtung gegen die Formmatrize (111) und/oder den Ausrichtkörper,
- Ausrichten der Vorproduktführung (107) und/oder der Formmatrize (111) zueinander und
- Ausbringen eines zentriert ummantelten Drahtes, Kabelvorproduktes oder einer zentriert ummantelten Litze.

## Claims

1. An extrusion device (101) for jacketing wires, cable semi-finished products, or strands, wherein the extrusion device (101) comprises an extrusion head (103) with a semi-finished product guide (107) and a shaping die (111), wherein the semi-finished product guide (107) and the shaping die (111) are arranged relative to one another in such a way that a molding compound passing through an opening of the semi-finished product guide (107) can be shaped by the shaping die (111) into an extruded molded part, and wherein the semi-finished product guide (107) and/or the shaping die (111) are assigned a motorized adjusting device (113) for applying an adjusting signal, such that, in the event of an applied adjusting signal, the semi-finished product guide (107) and the shaping die (111) can be aligned with respect to one another by means of a movement of the motorized adjusting device (113), wherein a pre-head (109) and/or the motorized adjusting device (113) is or are arranged non-integrated on the extrusion head (103), **characterized in that** the pre-head (109) and/or the motorized adjusting device (113) is or are arranged separately on a movable rail.

2. The extrusion device (101) according to claim 1, **characterized in that** the extrusion device (101) comprises a receiving device for receiving a continuously fed semi-finished material, in particular a wire, a cable semi-finished product, or a strand, such that the semi-finished material can be jacketed with the molding compound.

3. The extrusion device (101) according to one of the preceding claims, **characterized in that** the extrusion head (103) comprises a head housing (105).

4. The extrusion device (101) according to one of the preceding claims, **characterized in that** the motorized adjusting device (113) comprises an alignment body (115), wherein the alignment body (115) is mechanically operatively connected to the shaping die (111).

5. The extrusion device (101) according to one of the preceding claims, **characterized in that** the motorized adjusting device (113) is arranged on the shaping die (111) and/or on the alignment body (115).

6. The extrusion device (101) according to one of the preceding claims, **characterized in that** the motorized adjusting device (113) comprises at least one piezo actuator (117).

7. The extrusion device (101) according to claim 6, **characterized in that** the motorized adjusting device (113) comprises a second piezo actuator (117), a third piezo actuator (117), a fourth piezo actuator (117), and/or further piezo actuators (117).

8. The extrusion device (101) according to one of claims 4 to 7, **characterized in that** the alignment body is an alignment ring, and four piezo actuators (117) are arranged on the outside of the alignment ring (115) at intervals of 90°.

9. The extrusion device (101) according to claim 8, **characterized in that** the pre-head (109) comprises a centering device designed as a motorized adjusting device (113), wherein the centering device comprises a nozzle designed as the shaping die (111).

10. The extrusion device (101) according to one of claims 6 to 9, **characterized in that** the piezo actuator or the piezo actuators (117) has or have an adjusting travel in the range of 0.01 nm to 1 mm, preferably from 0.1 nm to 200 µm.

11. The extrusion device (101) according to one of the preceding claims, **characterized in that** the extrusion device (101) is assigned a measuring device for determining at least one measured variable of an extruded molded part and/or a control and/or regulating device, such that the adjusting signal can be applied to the motorized adjusting device (113) as a function of the determined measured variable.

12. An extruder for jacketing wires, cable semi-finished products, or strands, **characterized in that** the extruder comprises an extrusion device (101) according to one of claims 1 to 11.

13. A method for jacketing wires, cable semi-finished products, or strands by means of an extrusion device (101) according to claim 11 and/or an extruder according to claim 12, **characterized by** the following steps:
- introducing a continuously fed wire, cable semi-finished product, or a continuously fed strand into the extrusion head,
- extruding the molding compound through the semi-finished product guide (107) and the shaping die (111) to form a jacketed wire, cable semi-finished product, or jacketed strand,
- determining at least one measured variable of the jacketed wire, cable semi-finished product, or jacketed strand by means of the measuring device,
- using the determined measured variable to generate the adjusting signal,
- regulating and/or controlling the motorized adjusting device (113) by applying the adjusting signal,
- moving the motorized adjusting device toward the shaping die (111) and/or the alignment body,
- aligning the semi-finished product guide (107) and/or the shaping die (111) with respect to one another, and
- discharging a centrally jacketed wire, cable semi-finished product, or a centrally jacketed strand.

## Revendications

1. Dispositif d'extrusion (101) destiné à l'enrobage de fils, de produits semi-finis de câbles ou de torons, le dispositif d'extrusion (101) comprenant une tête d'extrusion (103) avec un guide de produit semi-fini (107) et une matrice de formage (111), le guide de produit semi-fini (107) et la matrice de formage (111) étant agencés l'un par rapport à l'autre de telle sorte qu'une masse de formage puisse être mise en forme, à travers une ouverture du guide de produit semi-fini (107), par la matrice de formage (111) en une pièce formée extrudée, et le guide de produit semi-fini (107) et/ou la matrice de formage (111) étant associé(s) à un dispositif de réglage motorisé, de sorte qu'en cas d'application (113) d'un signal de réglage au dispositif de réglage motorisé (113), le guide de produit semi-fini (107) et la matrice de formage (111) puissent être alignés l'un par rapport à l'autre au moyen d'un mouvement du dispositif de réglage motorisé (113), un pré-tête (109) et/ou le dispositif de réglage motorisé (113) étant disposé(s) de manière non intégrée sur la tête d'extrusion (103), **caractérisé en ce que** le pré-tête (109) et/ou le dispositif de réglage motorisé (113) est ou sont disposé(s) séparément sur un rail déplaçable.

2. Dispositif d'extrusion (101) selon la revendication 1, **caractérisé en ce que** le dispositif d'extrusion (101) comporte un dispositif de réception destiné à recevoir un matériau de départ défilant, en particulier un fil, un produit semi-fini de câble ou un toron, de sorte que le matériau de départ puisse être enrobé de la masse de formage.

3. Dispositif d'extrusion (101) selon l'une des revendications précédentes, **caractérisé en ce que** la tête d'extrusion (103) comporte un boîtier de tête (105).

4. Dispositif d'extrusion (101) selon l'une des revendications précédentes, **caractérisé en ce que** le dispositif de réglage motorisé (113) comporte un corps d'alignement (115), le corps d'alignement (115) étant mécaniquement couplé de manière fonctionnelle à la matrice de formage (111).

5. Dispositif d'extrusion (101) selon l'une des revendications précédentes, **caractérisé en ce que** le dispositif de réglage motorisé (113) est disposé sur la matrice de formage (111) et/ou sur le corps d'alignement (115).

6. Dispositif d'extrusion (101) selon l'une des revendications précédentes, **caractérisé en ce que** le dispositif de réglage motorisé (113) comporte au moins un actionneur piézoélectrique (117).

7. Dispositif d'extrusion (101) selon la revendication 6, **caractérisé en ce que** le dispositif de réglage motorisé (113) comporte un deuxième actionneur piézoélectrique (117), un troisième actionneur piézoélectrique (117), un quatrième actionneur piézoélectrique (117) et/ou d'autres actionneurs piézoélectriques (117).

8. Dispositif d'extrusion (101) selon l'une des revendications 4 à 7, **caractérisé en ce que** le corps d'alignement est une bague d'alignement et que quatre actionneurs piézoélectriques (117) sont disposés à l'extérieur de la bague d'alignement (115) à un écart angulaire de 90°.

9. Dispositif d'extrusion (101) selon la revendication 8, **caractérisé en ce que** le pré-tête (109) comporte un dispositif de centrage réalisé en tant que dispositif de réglage motorisé (113), le dispositif de centrage comprenant une buse réalisée en tant que matrice de formage (111).

10. Dispositif d'extrusion (101) selon l'une des revendications 6 à 9, **caractérisé en ce que** l'actionneur piézoélectrique ou les actionneurs piézoélectriques (117) présente(nt) une course de réglage comprise entre 0,01 nm et 1 mm, de préférence entre 0,1 nm et 200 µm.

11. Dispositif d'extrusion (101) selon l'une des revendications précédentes, **caractérisé en ce que** le dispositif d'extrusion (101) est associé à un dispositif de mesure destiné à déterminer au moins une grandeur mesurée d'une pièce formée extrudée et/ou à un dispositif de commande et/ou de régulation, de sorte que le signal de réglage puisse être appliqué au dispositif de réglage motorisé (113) en fonction de la grandeur mesurée déterminée.

12. Extrudeuse destinée à l'enrobage de fils, de produits semi-finis de câbles ou de torons, **caractérisée en ce que** l'extrudeuse comporte un dispositif d'extrusion (101) selon l'une des revendications 1 à 11.

13. Procédé d'enrobage de fils, de produits semi-finis de câbles ou de torons au moyen d'un dispositif d'extrusion (101) selon la revendication 11 et/ou d'une extrudeuse selon la revendication 12, **caractérisé par** les étapes suivantes :
- introduction d'un fil défilant, d'un produit semi-fini de câble ou d'un toron défilant dans la tête d'extrusion,
- extrusion de la masse de formage à travers le guide de produit semi-fini (107) et la matrice de formage (111) pour former un fil enrobé, un produit semi-fini de câble ou un toron enrobé,
- détermination d'au moins une grandeur mesurée du fil enrobé, du produit semi-fini de câble ou du toron enrobé au moyen du dispositif de mesure,
- utilisation de la grandeur mesurée déterminée pour générer le signal de réglage,
- régulation et/ou commande du dispositif de réglage motorisé (113) par application du signal de réglage,
- déplacement du dispositif de réglage motorisé contre la matrice de formage (111) et/ou le corps d'alignement,
- alignement du guide de produit semi-fini (107) et/ou de la matrice de formage (111) l'un par rapport à l'autre, et
- sortie d'un fil, d'un produit semi-fini de câble ou d'un toron enrobé de manière centrée.
